Europäisches Patentamt

European Patent Office

Office européen des brevets

(11) Veröffentlichungsnummer: **0 084 638**
**B1**

(12) **EUROPÄISCHE PATENTSCHRIFT**

(45) Veröffentlichungstag der Patentschrift :
23.12.87

(51) Int. Cl.⁴ : **B 65 D 83/00**, G 01 F 11/02,
A 47 K 5/12

(21) Anmeldenummer : 82111372.7

(22) Anmeldetag : 08.12.82

(54) Spender für pastöse Produkte.

(30) Priorität : 19.01.82 DE 3201356
22.06.82 DE 3223267

(43) Veröffentlichungstag der Anmeldung :
03.08.83 Patentblatt 83/31

(45) Bekanntmachung des Hinweises auf die Patenterteilung : 23.12.87 Patentblatt 87/52

(84) Benannte Vertragsstaaten :
AT BE CH FR GB IT LI LU NL SE

(56) Entgegenhaltungen :
EP-A- 0 013 691
FR-A- 2 344 469
GB-A- 696 310
GB-A- 751 165
NL-A- 275 614
US-A- 2 269 371
US-A- 3 268 123

(73) Patentinhaber : GAP GESELLSCHAFT FÜR AUSWER-
TUNGEN UND PATENTE AG
Burgstrasse 28
CH-8750 Glarus (CH)

(72) Erfinder : Bossina, Jap
Mecklenburg Laan
NL-1402 AT Bussum (NL)

(74) Vertreter : Patentanwälte Grünecker, Dr. Kinkeldey, ,
Dr. Stockmair, Dr. Schumann, Jakob, Dr. Bezold,
Meister, Hilgers, Dr. Meyer-Plath
Maximilianstrasse 58
D-8000 München 22 (DE)

**Beschreibung**

Die Erfindung betrifft einen Spender für pastöse Produkte nach dem Oberbegriff des Anspruchs 1.

Ein derartiger Spender ist beispielsweise aus der US-PS 3 268 123 bekannt und weist einen das jeweilige Produkt enthaltenden im wesentlichen zylindrischen Behälter auf, der an seinem oberen Ende eine handbetätigte Fördereinrichtung aufweist. Diese Fördereinrichtung ist als Förderkolben ausgebildet, dessen Kolbenfläche im wesentlichen gleich groß ist wie die Innenquerschnittsfläche des Behälters und der eine Durchlaßöffnung aufweist, an die sich eine nach außen führende Ausgabeeinrichtung mit einem in Ruhestellung durch einen Verschluß verschließbaren Ausgabekanal anschließt. Ferner weist der Behälter an seinem unteren Ende einen durch den Druck der Außenatmosphäre längs der Behälterinnenwand verschieblichen Verschlußkolben auf.

Soll der bekannte Spender betätigt werden, so wird durch Fingerdruck die Verschlußeinrichtung geöffnet. Nach Beendigung des Fingerdruckes wird die Verschlußeinrichtung mit Hilfe einer Feder in ihre Schließstellung zurückgebracht. Hierbei weist die Verschlußeinrichtung des bekannten Spenders ein mechanisch betätigtes, zwangsgesteuertes Verschlußglied auf, welches formschlüssig in und außer Anlage an entsprechend gestaltete Verschlußgliedsitze bewegbar ist.

Um diese mechanische, formschlüssige und zwangsgesteuerte Verschlußeinrichtung in dem herkömmlichen Spender auszubilden, ist ein beträchtlicher Aufwand bei der Herstellung erforderlich. So ist eine äußere Überwurfkappe vorgesehen, auf die der Fingerdruck ausgeübt wird und die mit der Verschließeinrichtung mechanisch gekoppelt ist.

Hierbei ist jedoch nachteilig, daß es nach wiederholter Spenderbetätigung, d. h. nach wiederholtem Beaufschlagen und Freigeben der Überwurfkappe zum Verkratzen der äußeren Mantelfläche des Spenderbehälters kommen kann, was dessen Aussehen negativ beeinflußt. Zudem ist die Handhabung des bekannten Spenders unangenehm, weil die hin-und herbewegliche Überwurfkappe gegen die den Spender haltende Hand des Benutzers stößt. Ferner ist durch die Betätigung des bekannten Spenders mittels Fingerdruck auf die als Ganzes zu verschiebende Überwurfkappe eine feinfühlige Dosierung der zu spendenden Menge nicht möglich. Dabei ist auch zu beachten, daß bei dem bekannten Spender der Ausgabekanal und die Ausgabeöffnung die über Fingerdruck bewirkte Verschiebebewegung der äußeren Überwurfkappe in vollem Umfange mitmacht, sobald ein kurzer Anfangsweg zur Öffnung des mechanisch betätigten Verschlusses der Ausgabeöffnung durchlaufen ist. Dies erschwert ein Abgeben der gespendeten Menge an eine bestimmte Stelle sehr oder macht es sogar unmöglich.

Aus der GB-PS 751 165 ist ein Spender für flüssige Erzeugnisse bekannt, welcher einen in einem Zylinder aufgenommenen Kolben aufweist, dessen hohl ausgebildete Kolbenstange sich in das Innere des bekannten Spenders hineinerstreckt. Es sind ferner zwei Rückschlagventile vorgesehen, um dem flüssigen Inhalt des Spenders einen Weg aus dem Hauptbehälter in eine der hohlen Kolbenstange zugeordnete Pumpenkammer zu ermöglichen. Hierbei handelt es sich jedoch um einen Spender anderer Bauart, der keinen durch den Druck der Außenatmosphäre längs einer Behälterinnenwand verschieblichen Verschlußkolben aufweist, und überdies den Nachteil einer relativ komplizierten Konstruktion mit sich bringt.

Aus der FR-A-2 344 469 ist ein Spender bekannt, dessen oberes offenes Ende eines Behälters von einer verformbaren Kappe abgedeckt ist, die in einen Ausflußkanal mündet. Im Anschlußbereich des Ausflußkanals an die Kappe ist ein Rückschlagventil mit einer Verschließklappe vorgesehen. Der Ausflußkanal ist mit einer Druckfläche versehen, auf die von außen her, beispielsweise mittels eines Fingers, Druck ausgeübt werden kann, mittels dessen die Abschlußkappe verformt werden kann. Bei einem Nachuntendrücken des Abflußkanals und damit einem entsprechenden Verformen der Kappe wird Material, das sich im Innern des Behälters befindet, durch das sich nach oben öffnende Rückschlagventil hindurch in den Ausflußkanal und von dort ins Freie gedrückt. Sobald der äußere Druck weggenommen wird, formt sich die Kappe unter ihrer Eigenelastizität in die Ausgangsform zurück. Dabei schließt das Rückschlagventil unter der Wirkung des gegenüber dem Druck im Behälterinneren dann höheren Atmosphärendrucks. Dieser bekannte Spender weist den Nachteil auf, daß eine feinfühlige Dosierung der zu spendenden Menge nicht möglich ist, wobei andererseits zur Erzielung einer überhaupt ausreichenden Förderwirkung eine relativ starke Verformung der Abdeckkappe erfolgen muß, was wiederum eine meist unerwünscht große und in ihrer Dosierung unkontrollierbare Abgabemenge zur Folge hat. Durch die Anordnung einer Druckfläche an dem Ausgabekanal wird dieser und mit ihm seine Ausgabeöffnung bei einer Verformung der Abdeckkappe unkontrollierbar disloziert, so daß eine Aufbringung der zu spendenden Menge Material auf einer vorbestimmten Stelle praktisch nicht möglich ist.

Aus der GB-A-696 310 ist ein Spender bekannt, dessen Aufbau dem Spender der GB-A-751 165 ähnelt, der also vor allem keinen sogenannten Nachlaufkolben aufweist und dessen Schwenkhebelmechanismus lediglich zum vorübergehenden Angriff an einem Druckkolben zum schrittweise fortschreitenden Nachuntendrücken desselben ausgebildet ist, so daß dieser Spender den Nachteil aufweist, daß er nicht zur Betätigung eines hin- und hergehenden Pumpkolbens zum dauernden Angriff an demselben geeignet ist.

Ein wiederum dem letzten Spender ähnlicher Spender ist ferner aus der US-A-2 269 371 bekannt, dessen in einen Behälterinnenraum mündender mit einer Ausgabeöffnung versehener Druckkolben über ein Betätigungsteil verschoben werden kann, das ein nach außen weisendes Griffteil aufweist. Dieses Betätigungsteil ist kegelstumpfförmig ausgebildet und gleitet entlang einem entsprechend ausgebildeten Deckelteil des Behälters unter Druckwirkung auf das Griffteil bis zum Anschlag an eine das Behälterinnere abschließende Wand und wird durch die Kraft einer Feder wieder in seine Ausgangslage zurückgestellt. Dieses Betätigungsteil muß aus einem Material, wie beispielsweise elastischem Gummi, hergestellt sein, das eine ausreichende Reibung mit dem durch das Betätigungsteil hindurchlaufenden Druckkolben ermöglicht, damit dieses den Druckkolben nach unten bewegen kann. Daher weist dieser bekannte Spender den Nachteil auf, daß beim Auftreten von Verschmutzungen und bei Materialermüdung des Betätigungsteiles diese ausreichende Reibung häufig nicht mehr gegeben ist, so daß die exakte Funktion des bekannten Spenders nicht mehr aufrechterhalten werden kann.

Schließlich ist aus der EP-A-13 691 ein Spender für pastöse Produkte bekannt, der einen im wesentlichen zylindrischen Behälter zur Aufnahme des auszugebenden Produktes aufweist, dessen unteres Ende durch einen durch die Wirkung der Außenatmosphäre verschieblichen Verschlußkolben verschlossen ist. Am oberen Ende des Behälters ist ein Kopfstück angeordnet, das auf der Außenmantelfläche des Behälters gleitbeweglich geführt ist. In einer den oberen Teil des Behälters verschließenden Trennwand ist eine Öffnung vorgesehen, an der ein Ventilsitz ausgebildet ist, der mit einem Ventildeckel zusammenwirkt, der an dem Kopfstück befestigt ist. Am oberen Ende des Kopfstückes ist ferner ein Applikator und ein diesen aufnehmendes Hülsenteil vorgesehen, in welchem eine weitere elastische Klappe angeordnet ist, die wie der Ventildeckel bei Betätigung als Rückschlagventil wirkt. Zum Entnehmen von Material aus dem Behälterinneren wird unmittelbar auf das Kopfstück gedrückt, so daß auch dieser bekannte Spender den Nachteil aufweist, daß eine feinfühlige Dosierung der zu spendenden Menge nicht möglich ist, wie dies im einzelnen schon im Zusammenhang mit dem aus der FR-A-2 344 469 bekannten Spender erläutert worden ist.

Es ist daher Aufgabe der vorliegenden Erfindung, einen Spender der im Oberbegriff des Anspruchs 1 angegebenen Gattung zu schaffen, welcher bei einfachem Aufbau und wirtschaftlicher Herstellung hinsichtlich der erforderlichen Betätigungskraft und der Ausgabemenge eine Vorbestimmung und Dosierbarkeit gewährleistet.

Bei dem gattungsgemäßen Spender wird diese Aufgabe durch die kennzeichnenden Merkmale des Anspruchs 1 gelöst.

Durch das Vorsehen der schwenkbar gelagerten Schwenktaste wird zunächst die Möglichkeit für eine feinfühlige Dosierung ermöglicht, wobei bei Wahl entsprechender Hebellängen die Druckkräfte, die den Förderkolben beaufschlagen, eingestellt werden können. Dadurch kann beispielsweise durch entsprechende Dimensionierung dafür gesorgt werden, daß Kleinkinder nicht imstande sind, den erfindungsgemäßen Spender zu betätigen.

Desweiteren stellt das Vorsehen der feinfühlig betätigbaren Schwenktaste die einwandfreie Funktion des Rückschlagventiles sicher, da sich gezeigt hat, daß durch diese Konstruktion eine Vergleichmäßigung des Bewegungsablaufes und eine genauere Einhaltung der Bewegungsrichtung des Förderkolbens ermöglicht wird, was darauf zurückzuführen ist, daß nur die Kraftkomponenten, die exakt nach unten gerichtet sind, über die Schwenktaste übertragen werden. Dies wiederum zeitigt günstige Auswirkungen auf die Funktion des Rückschlagventiles, da sich dieses im bewegten Teil des erfindungsgemäßen Spenders befindet.

Ein weiterer besonderer Vorteil des erfindungsgemäßen Spenders ist darin zu sehen, daß er von seiner Konzeption her für vergleichsweise kleine Behälterdurchmesser geeignet ist, so daß der Spender gemäß der Erfindung auch bei sehr klein gewählten Abmessungen, beispielsweise für Kleinpackungen, funktionstüchtig ist.

Die Unteransprüche haben vorteilhafte Weiterbildungen der Erfindung zum Inhalt.

Die Erfindung wird im folgenden unter Bezug auf die Zeichnung näher beschrieben. Hierbei zeigt die einzige Figur der Zeichnung einen Vertikalschnitt durch einen erfindungsgemäßen Spender.

Wie in der Figur dargestellt, besteht der Spender im wesentlichen aus einem Behälter 7 mit im wesentlichen zylindrischer Querschnittsgestalt, einem das untere Behälterende verschließenden ortsbeweglichen Verschlußkolben 8, der nach Maßgabe der Entleerung des Behälters aus der dargestellten Stellung an der Behälterinnenwandung entlanggleitend unter dem Druck der Außenatmosphäre nach oben wandert, aus einer ans obere Behälterende angeschlossenen Ausgabeeinrichtung 2, die mit einem Förderkolben 6 verbunden ist, und aus einer abnehmbaren Steckkappe 1.

Der den oberen Abschluß des Innenraums des Behälters 7 bildende Förderkolben besitzt eine wirksame Kolbenfläche, die abgesehen von einer sie durchsetzenden, mittels eines Ventils 4 verschließbaren Ausgangsöffnung im wesentlichen die gleiche Fläche aufweist, wie die Innenquerschnittsfläche des Behälters 7. Der Umfang des Förderkolbens 6 ist mit wenigstens einem Dichtungswulst 6A versehen, welcher dichtend in Anlage an der Innenwand des Behälters 7 ist. Im Zentralbereich des Förderkolbens 6 ist die von dem Ventil 4 verschließbare Durchlaßöffnung des Förderkolbens angeordnet, wobei sich diese Durchgangsöffnung und das Ventil 4 auf einer gegenüber der Hauptebene des Förderkolbens höher gelegenen Ebene befinden. Wie in der Zeichnung dargestellt, ist folglich im zentralen Bereich des Förderkolbens 6 ein im wesentlichen zylindrischer oder kegelstumpfförmiger Kolbenabschnitt 6B vorgesehen, dessen oberes Ende durch die Ebene des Ventils 4 bestimmt ist und dessen unteres Ende durch die Hauptebene des Förderkolbens 6 bestimmt ist. Der Durchmesser dieses Kolbenabschnittes 6B ist im wesentlichen gleich groß wie die von dem Ventil 4 verschlossene Durchlaßöffnung. An das obere Ende des Kolbenabschnittes 6B schließt sich ein Ausgabekanal 2A der Ausgabeeinrichtung 2 an. Dieser Ausgabekanal 2A beginnt am Ventil 4 und endet an einer Ausgabeöffnung 2B der Ausgabeeinrichtung 2.

Bei der in der Zeichnung dargestellten Ausführungsform ist das untere Ende der äußeren Begrenzungswandung 10 des Ausgabekanals 2A mittels einer auf der Innenumfangsfläche dieses unteren Wandungsendes sowie auf der Außenumfangsfläche des oberen Abschnittes der Kolbenabschnitts 6B ausgebildeten Hakeneinrichtung starr mit dem genannten oberen Ende des Kolbenabschnitts 6B verbunden. Statt der dargestellten Hakeneinrichtung ist beispielsweise auch eine Gewindeverbindung zwischen dem unteren Ende der Kanalwandung 10 und dem oberen Ende des Kolbenabschnitts 6B möglich.

Das obere Ende des Behälters 7 ist so ausgebildet, daß im Zentralbereich ein im wesentlichen zylinderförmiger Abschnitt 12 mit im wesentlichen parallel zur Behältermittellinie verlaufenden Wandungen und beispielsweise zylindrischer Querschnittsgestalt gebildet ist. Der Durchmesser dieses zylinderförmigen Abschnittes 12 ist so gewählt, daß, wie in der Zeichnung dargestellt, der vorstehende zentrale Kolbenabschnitt 6B und auch das daran angeschlossene untere Ende der Begrenzungswandung 10 des Ausgabekanals 2A im Inneren des zylinderförmigen Abschnitts 12 aufnehmbar sind. Bei der folgenden Spezialbeschreibung der ersten Ausführungsform hat das untere Ende des Abschnitts 12 einen einwärts in Richtung auf den Kolbenabschnitt 6B vorstehenden Rand 13, der sich bis an die Außenoberfläche des zentralen Kolbenabschnittes 6B erstreckt. Zwischen diesem unteren Rand 13 und dem unteren Ende der Austrittskanal-Begrenzungswandung 10 ist eine Druckfeder 5 angeordnet, die sich somit an einem Ende auf dem einwärts vorspringenden Rand 13 und andererseits auf der Unterkante der Kanalwandung 20 abstützt. Die Innenoberfläche des Abschnitts 12 dient somit als Führungseinrichtung für das untere Ende der Kanalwand 10 und dem zentralen, vorstehenden Kolbenabschnitt 6B. Wie bereits erwähnt, ist der Abschnitt 12 fest mit der Wandung des Behälters 7 verbunden.

Der Förderkolben 6 ist in der Figur in seiner obersten Grenzstellung gezeigt. Wie in der Zeichnung dargestellt, liegt der Dichtwulst 6A an einer einwärts vorspringenden Kante 7A des Behälters 7 an, welche eine weitere Aufwärtsbewegung des Förderkolbens 6 im Behälter 7 verhindert.

Wird nach Entfernen der Steckkappe 1 vom Behälter 7 eine nach unten gerichtete Kraft auf den Förderkolben 6 ausgeübt, wie durch entsprechende Druck beaufschlagung der Ausgabeeinrichtung 2, so wird der Förderkolben 6 aus seiner in der Zeichnung dargestellten Stellung um eine bestimmte Wegstrecke nach unten bewegt. Als Folge des dadurch auf das im Inneren des Behälters 7 vorliegende pastöse Produkt ausgeübten Drucks tritt eine Portion dieses Produktes durch das Ventil 4, dessen Offenstellung in der Zeichnung gestrichelt angedeutet ist, hindurch und in den Ausgabekanal 2A hinein, um aus der Ausgabeöffnung 2B ausgegeben zu werden, beispielsweise auf eine Zahnbürste. Nach Beendigung der Druckausübung auf den Förderkolben 6, d. h. im dargestellten Ausführungsbeispiel auf die starr mit dem Kolbenabschnitt 6B verbundene Ausgabeeinrichtung 2, kehrt der Förderkolben 6 unter der Wirkung der Druckfeder 5 wieder in seine in der Zeichnung dargestellte Ausgabestellung zurück. Gleichzeitig bewegt sich der am unteren Ende des Behälters 7 vorgesehene Verschlußkolben 8 entsprechend der ausgegebenen Menge des Behälterinhaltes nach oben, da der äußere Luftdruck die Außenfläche des Verschlußkolbens 8 beaufschlagt.

Während des vorstehend geschilderten Ausgabevorgangs bewegt sich somit die Ausgabeeinrichtung zusammen mit dem Förderkolben um die erwähnte Wegstrecke nach unten. Dementsprechend bewegt sich die Ausgabeöffnung 2B aus der in der Figur dargestellten Stellung um eine entsprechende Wegstrecke nach unten. Als Folge der sehr groß dimensionierten wirksamen Fläche des Förderkolbens 6, dessen Fläche, wie bereits erwähnt, praktisch so groß ist, wie die Querschnittsfläche des Behälters 7 und folglich wie die innenseitige Fläche des Verschlußkolbens 8, ist diese Verlagerungs-Wegstrecke jedoch nur recht gering im Vergleich zur ausgegebenen Menge des pastösen Produktes. Folglich führt die erwähnte Verlagerung der Ausgabeöffnung 2B bei der Spenderbetätigung nicht zu Problemen hinsichtlich des Ausgabeortes des Produktes. Wären statt der beim Spender nach der Erfindung gewährleisteten kurzen Verlagerungswege der Ausgabeöffnung recht lange Ausgabewege erforderlich, so könnte es beispielsweise leicht vorkommen, daß die bereitgehaltene Zahnbürste nicht richtig getroffen wird.

Spätestens bei der Rückstellung des Förderkolbens und der Ausgabeeinrichtung vermittels der Druckfeder 5 nimmt das als Rückschlagventil ausgebildete Ventil 4 seine in der Figur dargestellte Schließstellung ein.

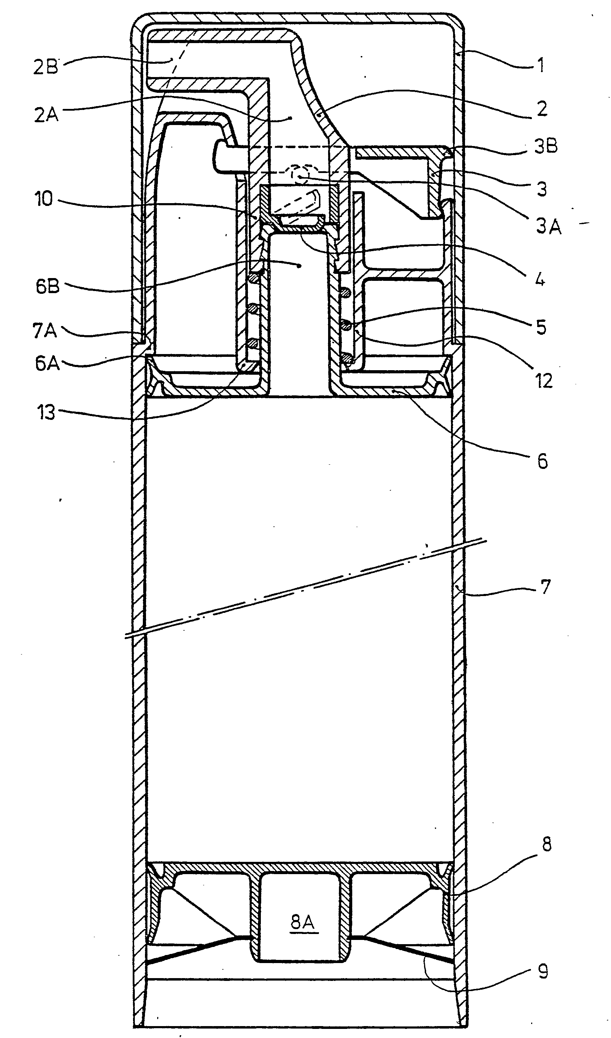

Vorzugsweise ist bei der ersten Ausführungsform des Spenders eine verschwenkbare Drucktaste 3 vorgesehen, um den Förderkolben 6 zu beaufschlagen. Wie in der Figur dargestellt, ist diese Drucktaste 3 als um eine Schwenkachse 3A verschwenkbarer Hebel ausgebildet, wobei die Schwenkachse 3A in der Außenwandung 10 des Ausgabekanals 2A gehalten ist. Durch eine Begrenzung des Hebelweges der Drucktaste 3 kann eine maximale Ausgabemenge des Spenders vorgegeben werden. Bei der in Fig. 1 dargestellten Ausführungsform ist der Verlagerungsweg der Drucktaste 3 blockiert, wenn das radial äußere Hebelende 3B in Anlage gelangt an die obere Kante des Behälters 7. Nach einer nicht in der Zeichnung dargestellten Ausführungsform kann vorgesehen sein, daß sich das dem äußeren Hebelende 3B gegenüberliegende Hebelende an einem entsprechenden Vorsprung des Gehäusewandung, insbesondere des Führungsabschnitts 12, abstützt.

Durch entsprechende Wahl des Betätigungs-Hebelweges für die Drucktaste 3 läßt sich die zur Spenderbetätigung erforderliche Kraft vorbestimmen. So kann durch eine geeignete Hebelgeometrie die zur Spenderbetätigung benötigte Kraft so groß gewählt werden, daß Klein- oder Vorschulkinder nicht imstande sind, eine Förderung des Spenderinhaltes herbeizuführen. Abgesehen von diesem Gesichtspunkt der Kindersicherung kann die Hebelarmgeometrie jedoch auch in Abhängigkeit von der jeweils im Spender vorhandenen pastösen Masse gewählt sein.

Am Verschlußkolben 8 können Sperrelemente 9 vorgesehen sein, die dem Verschlußkolben lediglich eine Aufwärtsbewegung innerhalb des Behälters, nicht jedoch eine Abwärtsbewegung gestatten. Diese Sperrelemente können aus Metallzungen bestehen, die sich von einem zentralen Vorsprung 8A des Verschlußkolbens radial nach außen in Anlage an die Innenwand des Behälters 7 erstrecken, wobei diese Zungen 9 so bemessen sind, daß sie etwas länger sind als der Abstand zwischen der Außenwandung des Vorsprunges 8A und der Behälterinnenwand. Folglich versperren diese Elemente 9 dem Verschlußkolben 8 jegliche Bewegung in Richtung auf das untere Behälterende.

Bei dem Spender nach der vorstehend beschriebenen ersten Ausführungsform der Erfindung läßt sich in der Praxis keine Verminderung des Behälterdurchmessers auf weniger als circa 25 mm erreichen, weil die als Hebeleinrichtung ausgebildete Drucktaste zur Beaufschlagung des Förderkolbens 6 nicht weitgehend verkleinert werden kann, ohne die Funktionstüchtigkeit zu verlieren.

Bei der im folgenden beschrieben zweiten Ausführungsform der Erfindung ist eine sehr weitgehende Miniaturisierung des Spenders, beispielsweise auf Spenderdurchmesser von 5 mm oder weniger ermöglicht.

Nach einer bevorzugten Ausgestaltung der zweiten Ausführungform der Erfindung ist vorgesehen, daß das Ausgabeteil relativ zum Behälter im senkrechter Richtung verlagerbar ist. Dabei hat es sich als vorteilhaft herausgestellt, daß der Außenumfang des unteren, im wesentlichen zylindrischen, Endabschnitts der Ausgabeeinrichtung im wesentlichen gleich dem Innendurchmesser des zylindrisch geformten oberen Abschnitt des Behälters ist.

Nach einer weiteren vorteilhaften Ausgestaltung der zweiten Ausführungsform der Erfindung ist vorgesehen, daß am Ausgabeteil Stop-Einrichtungen vorgesehen sind, die mit dem Behälter zusammenwirken, um die Begrenzung der Bewegung des Ausgabeteils relativ zum Behälter zu begrenzen.

Ferner hat es sich als vorteilhaft herausgestellt, daß im Bereich des oberen Endes des Behälters an der Behälterwandung gehaltene Versteifungen ausgebildet sind, an welchen Führungsflächen für den Zentralbereich des Förderkolbens vorgesehen sind.

Nach einer weiteren vorteilhaften Ausgestaltung der zweiten Ausführungsform ist vorgesehen, daß diesen Versteifungen Abstützeinrichtungen für das untere Ende einer Rückstellfeder für den Förderkolben zugeordnet sind, wobei im Ausgabeteil Abstützungen für das obere Ende der Rückstellfeder vorgesehen sein können. Ferner können die Versteifungen vorteilhafterweise als obere Stopper für den Förderkolben ausgebildet sein, so daß der Verschiebeweg des Förderkolbens nach oben durch diese Versteifungen begrenzt ist.

Der Behälter kann vorteilhafterweise eine gestufte Gestalt besitzen oder sich in seinem Durchmesser verändern, so lange sichergestellt ist, daß der Behälter in seinem oberen Endabschnitt, in welchem die Kolbenverschiebung erfolgt, zylindrisch gestaltet ist.

Ferner kann vorgesehen sein, Behälter unterschiedlicher Gestalt und/oder unterschiedlicher Volumina nacheinander mit ein und dem gleichen Spendekopf (enthaltend den Betätigungskolben, die Ausgabeeinrichtung und die Ventileinrichtung) zu verbinden.

## Patentansprüche

1. Spender für pastöse Produkte mit einem das jeweilige Produkt enthaltenden, im wesentlichen zylindrischen Behälter (7), der an seinem oberen Ende eine handbetätigte Fördereinrichtung aufweist, die als Förderkolben (6) ausgebildet ist, dessen Kolbenfläche im wesentlichen gleich groß ist wie die Innenquerschnittsfläche des Behälters (7) und der eine Durchlanöffnung aufweist, an die sich eine nach außen führende Ausgabeeinrichtung (2) mit einem in Ruhestellung durch einen Verschluß verschließbaren Ausgabekanal (2A) anschließt, und der an seinem unteren Ende einen durch den Druck der Außenatmosphäre längs der Behälterinnenwand verschieblichen Verschlußkolben (8) aufweist, dadurch gekennzeichnet, daß zur Betätigung des Förderkolbens (6) eine am oberen Ende des Behälters (7) schwenkbar gelagerte Schwenktaste (3) vorgesehen ist, die an der Ausgabeeinrichtung (2, 10) angreift und daß der Verschluß der Ausgabeeinrichtung (2, 10) als ein auf Druckunterschiede ansprechendes, ein mit einem Ventilsitz zusammenwirkendes Verschließteil aufweisendes Rückschlagventil (4) ausgebildet ist.

2. Spender nach Anspruch 1, dadurch gekennzeichnet, daß die Durchlaßöffnung im Zentrum des Förderkolbens (6) vorgesehen ist und als im zentralen Bereich des Förderkolbens vorgesehener Kolbenabschnitt (6B) in Form eines Halses ausgebildet ist, mit dem die Ausgabeeinrichtung (2, 10) bewegungsübertragend verbunden ist.

3. Spender nach einem der Ansprüche 1 oder 2, dadurch gekennzeichnet, daß im oberen Endbereich des Behälters (7) ein Führungsabschnitt (12) vorgesehen ist, in welchem das mit dem halsförmigen Kolbenabschnitt (6B) des Förderkolbens (6) verbundene untere Ende der Ausgabeeinrichtung (2) zusammen mit einer den Kolbenabschnitt (6B) umgebenden Federeinrichtung (5) aufgenommen ist.

4. Spender nach einem der Ansprüche 1 bis 3, dadurch gekennzeichnet, daß die Ausgabeeinrichtung (23) relativ zum Behälter (7) in senkrechter Richtung verlagerbar ist.

5. Spender nach einem der Ansprüche 1 bis 4, dadurch gekennzeichnet, daß am Ausgabeteil (2) Stopp-Einrichtungen (16) vorgesehen sind, die mit dem Behälter (7) zusammenwirken, um die abwärtsgerichtete Bewegung des Ausgabeteils relativ zum Behälter zu begrenzen.

6. Spender nach einem der Ansprüche 1 bis 5, dadurch gekennzeichnet, daß der Behälter (7) in seinem oberen Bereich eine einwärts vorspringende ringsumlaufende Schulter (7A) aufweist, an welcher in der oberen Ruhestellung des Förderkolbens (6) der äußere Umfangsrand (6A) desselben zur Anlage kommt.

7. Spender nach einem der Ansprüche 1 bis 6, dadurch gekennzeichnet, daß im Ausgabeteil (2) Abstützungen für das obere Ende der Rückstellfeder (5) vorgesehen sind.

8. Spender nach einem der Ansprüche 1 bis 7, dadurch gekennzeichnet, daß der Behälter (7) über Abschnitte unterschiedlichen Durchmessers verfügt.

9. Spender nach einem der Ansprüche 1 bis 8, dadurch gekennzeichnet, daß Behälter (7) unterschiedlichen Durchmessers und/oder unterschiedlichen Volumens an das Ausgabeteil (2) abnehmbar anschließbar sind.

## Claims

1. A dispenser for pasty products, comprising a substantially cylindrical container (7) containing the associated product and having at its top end a manually actuated delivery means in the form of a delivery piston (6), the piston area of which is substantially equal to the inside cross-sectional area of the container (7), and which has a passage aperture to which there is connected an outwardly extending dispensing means (2) having a dispensing duct (2A) closable by a closure in the inoperative position, and the bottom end of which has a closure piston (8) slidable along the container inner wall in response to the pressure of the external atmosphere, characterised in that a pivoting button (3) mounted pivotably at the top end of the container (7) is provided for actuation of the delivery piston (6) and engages the dispensing means (2, 10) ; and the closure for the dispensing means (2, 10) is constructed in the form of a nonreturn valve (4) responding to pressure differences and having a closure part co-operating with a valve seat.

2. A dispenser according to claim 1, characterised in that the passage aperture is provided in the centre of the delivery piston (6) and is constructed as a piston portion (6B) in the form of a neck provided in the central zone of the delivery piston, the dispensing means (2, 10) being connected to said portion (6B) so as to transmit motion.

3. A dispenser according to claim 1 or 2, characterised in that a guide portion (12) is provided in the top end zone of the container (7) and receives the bottom end of the dispensing means (2) connected to the neck-shaped portion (6B) of the delivery piston (6), together with a spring means (5) surrounding the piston portion (6B).

4. A dispenser according to any one of claims 1 to 3, characterised in that the dispensing means (23) is displaceable vertically relatively to the container (7).

5. A dispenser according to any one of claims 1 to 4, characterised in that stop means (16) are provided on the dispensing part (2) and co-operate with the container (7) to limit the downward movement of the dispensing part relatively to the container.

6. A dispenser according to any one of claims 1 to 5, characterised in that the top zone of the container (7) has an inwardly projecting annular shoulder (7A) which the outer peripheral edge (6A) of the delivery piston (6) abuts in the top inoperative position of said piston.

7. A dispenser according to any one of claims 1 to 6, characterised in that supports for the top end of the return spring (5) are provided in the dispensing part (2).

8. A dispenser according to any one of claims 1 to 7, characterised in that the container (7) has portions of different diameters.

9. A dispenser according to any one of claims 1 to 8, characterised in that containers (7) of different diameters and/or different volumes are adapted to be detachably connected to the dispensing part (2).

## Revendications

1. Distributeur pour produits pâteux muni d'un récipient (7), de configuration pratiquement cylindrique, contenant le produit désiré, présentant à son extrémité supérieure un dispositif d'extraction actionné manuellement constitué par un piston d'extraction (6) dont la superficie est pratiquement égale à la superficie transversale intérieure du récipient (7) et qui présente une ouverture à laquelle est raccordé un dispositif de sortie (2) menant vers le haut avec un canal de sortie (2A) fermé, dans sa position initiale, par un obturateur, et qui présente un piston d'obturation (8) déplaçable à son extrémité inférieure le long de la paroi du récipient sous l'effet de la pression atmosphérique extérieure, caractérisé en ce que pour actionner le piston d'extraction (6), l'extrémité supérieure du récipient (7) est munie d'une manette pivotante (3) qui agit sur le dispositif de sortie (2, 10) et en ce que l'obturateur du dispositif de sortie (2, 10) est constitué par une soupape de retenue (4) fonctionnant sous l'action des différences de pression et présentant une partie agissant conjointement avec un siège de soupape.

2. Distributeur selon la revendication 1, caractérisé en ce que l'ouverture est disposée dans le centre du piston d'extraction (6) et forme une section de piston (6B) prévue dans la partie centrale du piston d'extraction en forme de gorge à laquelle est relié le dispositif de sortie (2, 10) dont il transmet le mouvement.

3. Distributeur selon l'une quelconque des revendications 1 et 2, caractérisé en ce que dans la zone terminale supérieure du récipient (7), il est prévu une section conductrice (12), dans laquelle sont compris l'extrémité inférieure du dispositif de sortie (2) reliée à la section de piston (6B) en forme de gorge (6B) et le ressort (5) entourant la section de piston.

4. Distributeur selon l'une quelconque des revendications 1 à 3, caractérisé en ce que le dispositif de sortie est déplaçable relativement au récipient (7) perpendiculairement.

5. Distributeur selon l'une quelconque des revendications 1 à 4, caractérisé en ce que le dispositif de sortie (2) est doté de dispositifs de blocage qui agissent conjointement avec le récipient (7) pour limiter le mouvement descendant du dispositif de sortie par rapport au récipient.

6. Distributeur selon l'une quelconque des revendications 1 à 5, caractérisé en ce que le récipient (7) présente dans sa partie supérieure un épaulement (7A) annulaire saillant vers l'intérieur, sur lequel se place le bord extérieur circonférentiel (6A) du piston d'extraction (6) dans la position supérieure de repos de ce dernier (6).

7. Distributeur selon l'une quelconque des revendications 1 à 6, caractérisé en ce que le dispositif de sortie (2) est muni de supports de l'extrémité supérieure du ressort de rappel (5).

8. Distributeur selon l'une quelconque des revendications 1 à 7, caractérisé en ce que le diamètre du récipient (7) peut prendre plusieurs valeurs.

9. Distributeur selon l'une quelconque des revendications 1 à 8, caractérisé en ce que des récipients (7) de diamètres variables et/ou de volumes variables peuvent être raccordés au dispositif de sortie (2).